# EUROPEAN PATENT APPLICATION

(11) **EP 0 979 714 A1**
(43) Date of publication of application: **16.02.2000**
(21) Application number: 98830502.5
(22) Date of filing: 11.08.1998
(51) Int. Cl.: B29B 7/56

(54) **Roller mixer-homogenizer for rubber**

(71) Applicant: Comerio Ercole S.p.A., 21052 Busto Arsizio (Varese) (IT)
(72) Inventor: Lualdi, Renato, 21052 Busto Arsizio (IT)
(74) Representative: Pellegri, Alberto

(57) **Abstract**

A method for mixing/homogenizing a batch of rubber mixture in a roller mixer by recirculating the rubber to the inlet of the roller mixer while laterally shifting at least part of the recirculating rubber mixture, comprises continuously detaching the rubber laminated between the mixing rollers without permitting any banking of the rubber on the rollers surface, recirculating the whole batch of rubber in the form of a laminated tape along a closed path, remotely from the rollers and on conveyor means and homogenizing it by transversely pushing the edges of the running tape toward each other while falling back between the rollers by an opposed pair of belt conveyors independently shiftable toward and away from each other, while cooling the tape of mixture along said closed path of recirculation from and to the rollers. The relative positioning of the homogenization belt conveyors, of two containment side plates and the action of means of interrupting the continuity of said tape and of reversal of the direction of the motion of a first belt conveyor downstream of said rollers are coordinated to discharge a homogenized rubber tape of desired width and thickness, at the end of the mixing/homogenizing treatment.

## Description

### FIELD OF THE INVENTION

The present invention relates to techniques for mixing/homogenizing rubber mixtures and relative machines. More in particular the invention relates to a process and to a fully automated roller mixer/homogenizer machine.

### BACKGROUND

The production of rubber mixtures takes place through a number of steps. In a first step, the different components are fed in pre-established proportions to a blending station, such as for example to a Banbury-type mixer.

Thereafter, the premixed and heated mass is thereafter transferred to a mixer/homogenizer station which commonly include a pair of mixing rollers onto which the mixture banks and adheres to the surface of one of the rollers, while undergoing a laminating process which spreads out and mixes the various compounds of the elastomer mass.

Traditionally, an operator would first manually with a knife the rubber mixture layer adhering to the roller and then transversely cut a rubber strip lifting it off the roller surface. This rubber strip was thereafter fed back re-inserted to the nip between the mixing rollers while continuously changing the inlet point, laterally, in a substantially alternating or swinging manner, from one side end to the other of the laminating area of the nip, defined by wing rails, of the material recirculated between the mixing rollers, in order to ensure homogenization of the mixture owing to a continuous lateral shift a portion (the cut and lifted off strip) of the material being processed.

The constant presence and intervention of a skilled operator for adequately homogenizing of the rubber mixture is dangerous and exposes the operator to the fumes and gases emanating from the heated mixture, for prolonged periods of time.

To eliminate any manual operation, a fully automated roller mixer/homogenizer machine was proposed, as described and illustrated in the European Patent Application No. 82830214.1 of July 28, 1982, in the name of the same applicant.

Substantially, in that machine all the above cited manual operations were coordinately carried out by a plurality of automated cuffing means to form strips of pre-established width, scraper means for detaching said strips from one or the other roller, and conveying and homogenizing devices constituted by a roller for recirculating the strip of material detached from the roller to the nip of the two mixing rollers. The recirculating roller was mounted on a slide that had a reciprocating motion parallel to the inlet nip of predefined width of lamination, from one side end to the other and viceversa. Once the mixing/homogenizing process was completed, other automated means provided for transversely cut the entire rubber strip adhering to one of the two rollers, while dedicated pick up means lifted it off the surface of the laminating roller directing it to fall on a discharge belt conveyor.

During the mixing/homogenizing process, the repetitive lamination to which is subjected the preheated elastomer mixture tends to increase its temperature as a consequence of the intense plastic flow that is produced in the mass of elastomer mixture. Therefore, it is necessary to cool down the rubber mixture mass to prevent triggering any undue vulcanization and/or the surfacing of insoluble sulfides and/or of other compounds and additives. This critical cooling is difficult because apart from a recirculating strip portion, the greater portion of the mass of elastomer mixture remains adherent to the surface of one of the two mixing rollers.

A further drawback of the known machines is that the laminating width is preestablished by spacing apart two contouring side plates for containing the material banking up into the inlet nip of the laminating rollers depending on the width and thickness of the homogenized strip of elastomer mixture manageable or required by downstream stations receiving the mixed/homogenized strip.

On the other hand, such an imposition of the width of the strip does not permit to fully exploit the capability of the mixer/homogenizer machine, where the imposed width is smaller than the maximum lamination width of the rollers of the machine because a reduced processing time and/or increment of the processable rubber batch could be achieved if the maximum width of lamination allowed by the length of the rollers is exploited regardless of the width and thickness requisites of the homogenized strip to be discharged and conveyed toward downstream manufacturing stations of the production line.

Finally, the presence of longitudinal and transversal cutters for homogenizing the rubber mixture is often a source of inconvenient and malfunctioning.

### OBJECTIVES AND SUMMARY OF THE INVENTION

It has now being found an effective solution to these drawbacks and limitations of known machines by permitting, on one hand, a most accurate and unhindered control of the temperature of the rubber mixture being processed while on the other hand providing for a more efficient use of the mixing/homogenizing capability of the roller mixer machine being used, regardless of size requisites of the described homogenized rubber mixture strip imposed by devices and apparatuses downstream of the mixing/homogenizing station of the production line.

Differently from what occurs in known roller mixing, the approach of this invention is that the rubber mixture is not permitted to bank on one of the laminating rollers, that is to remain adherent to the surface of one of the mixing rollers on the contrary, the mixture is circulated in the form of a closed loop strip or tape of width that may advantageously be equal to the maximum laminating width allowed by the rollers length, from the exit point of the material continuously detached from the face of the roller, through a system plurality of conveyor belts, back to the nip zone between the two laminating rollers.

Along the recirculation path of the entire rubber mixture in the form of a continuous rubber tape on conveyor belts are located fans and/or extractors for accurately control and regulate the temperature of the circulating rubber mass during the whole roller mixing/homogenizing process.

Homogenization of the material is performed automatically by the use of two "feelers" each consisting preferably of a belt conveyor realized with a belt running on two pulleys installed on opposite sides of the recirculating rubber tape where it falls back into the next nip between the rollers. The two conveyors are generally coplanar and are independently shiftable towards the opposing edges of the recirculating rubber tape for pushing in one and/or the other edge of rubber tape being fed back to the laminating rollers. The succession of coordinated movements of the two pushing conveyors cause a continuous lateral shifting and intermixing of the material of the tape which is continuously re-laminated between the rollers along the entire laminating width of the mixing rollers.

In this way, the mixing/homogenizing process may proceed exploiting fully the maximum width of lamination permitted by the machine by leaving the containment side plates with the farthest separation between them while regulating the gap between the laminating rollers.

Once the mixing/homogenizing process is completed, the size of the rubber tape may be made to correspond to preestablished specifications according to the requisites imposed by downstream stations of the production line. This is obtained by coordinately positioning the pair of opposing conveyors and the containment side plates that define the laminating width of the inlet nip zone of the pair of rollers and by adjusting the gap between the laminating rollers.

Even during this final sizing process of the rubber tape to be discharged from the roller mixer machine, its circulation on the recirculating conveyors, permits a terminal cooling down to the most appropriate temperature for the successive treatment, speeding up the entire manufacturing process.

### BRIEF DESCRIPTION OF THE DRAWINGS

The various aspects and advantages of the invention will become even clearer through the following description of an embodiment and by referring to the attached drawings wherein:
**Figure 1** is a schematic view of the roller mixer/homogenizer machine realized according to the present invention;
**Figures 2** to **7** illustrate the mixing/homogenizing treatment that is carried out on a given batch of rubber mixture loaded in the machine.

The figures schematically illustrate an embodiment of a roller mixer/homogenizer of the invention and its parts are identified in all the figures with the same numbers. Of course, such functional parts may be realized in different ways depending on the specific requisites, however their functionalities will conform to what specified in the present description.

### DESCRIPTION OF AN EMBODIMENT

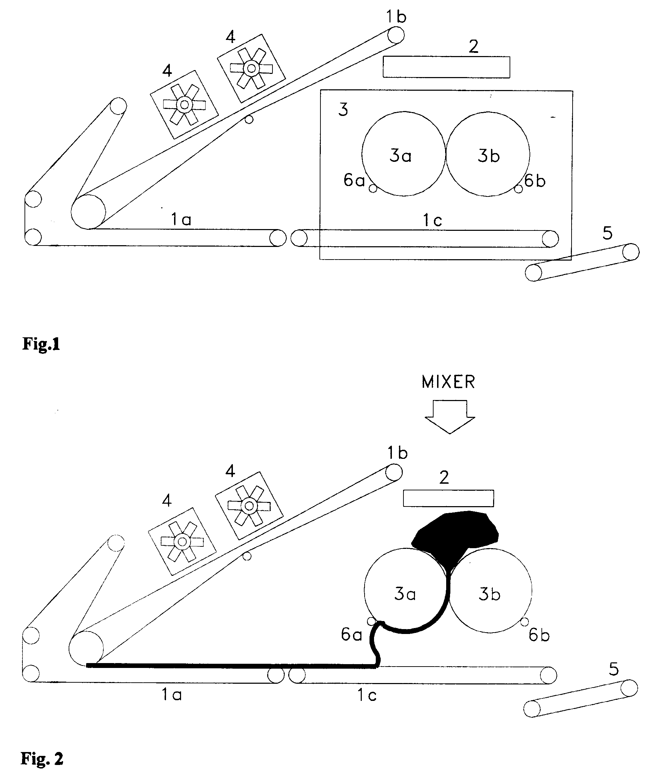

A schematic view of the whole roller mixer/homogenizer for rubber mixtures of the invention is shown in Fig. 1.

The machine comprises a pair mixing rollers 3a and 3b to which is associated a scraper device, respectively 6a and 6b, for detaching the rubber mixture bank adhering to one or to the other roller. Normally, the mixture will adhere to the hotter roller of the pair. Often the roller surfaces are provided with an anti-adherent finishing or coating and the rubber mixture tends to detach therefrom by its own weight. In any case, according to an essential aspect of the invention, the presence of scraper devices 6a and 6b will ensure in any case the detachment of the rubber mixture should it tend to stick on to the surface of one or the other roller.

The laminated rubber tape exiting the mixing rollers 3a and 3b is picked up by a first belt conveyor 1c, whose movement may be reversed, as will be described later.

For the whole duration of the mixing/homogenizing process, the first belt conveyor 1c conveys the rubber tape laminated between the rollers 3a and 3b toward a system of conveyor belts 1a and 1b which recirculates the rubber tape back to the inlet nip of the rollers 3a and 3b, thus realizing a recirculation of the mass of material being mixed and homogenized in the form of a closed loop rubber tape that continuously passes through the mixing rollers 3a and 3b and through one or more cooling stations 4 wherein an accurate temperature control of the circulating rubber mixture is implemented.

In falling back into the inlet nip between the rollers 3a and 3b, the rubber tape crosses the space of separation between two conveyor devices 2, for example two belt conveyors, coplanar to each other and substantially laying on a horizontal plane that is vertically crossed by the rubber mixture tape recirculating toward the mixing rollers.

The two conveyors may be independently shifted on the horizontal plane and alternately pushed against the respective opposite edge of the recirculating tape. Through a succession of coordinated movements of the two conveyor-pushers 2, a continuous lateral displacement of the tape material is performed, which by falling into the inlet nip between the rollers 3a and 3b is continuously re-laminated while recirculating along a closed path.

The mixing and homogenization process of the invention will be even clearer by referring to the Figures 2 to 7 which illustrate the significant steps.

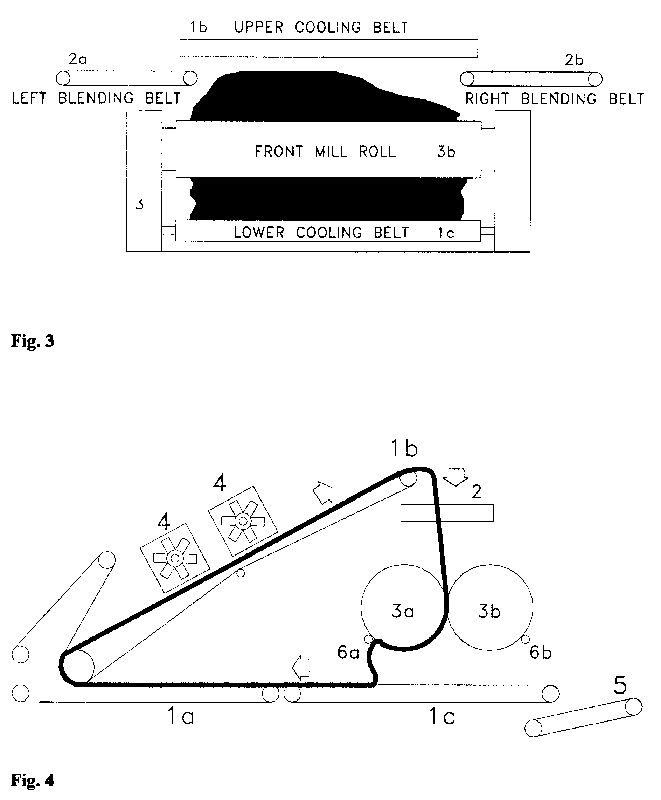

Figures 2 and 3 show the start-up phase of the mixing and homogenizing treatment according to this invention for a given batch of premixed and heated rubber mixture.

Any of the two belt conveyors 2a and 2b (visible in the front view of Fig. 3), may even serve for loading the premixed and heated mixture to be further mixed and homogenized, by the action of the mixing rollers 3a and 3b.

According to an important aspect of the invention, the two containment side plates, which are commonly used to determine a certain width of the lamination zone between the rollers, may be positioned by actuating driving motors or pneumatic cylinders in a position of maximum separation over the mixing rollers, regardless of the size requisites of the homogenized rubber tape to be eventually discharged and conveyed to the next station of the manufacturing line, of the rubber mixing/homogenizing station.

In this way, the full working capability of the machine may be exploited to enhance the yield of the mixing/homogenizing station.

Even though the laminating surfaces of the two rollers may be purposely finished to be substantially anti-adherent or to favor adherence of the rubber mixture onto one roller rather than on the other and/or the temperature of the two rollers be differently adjusted to favor adherence on the hottest one of the rollers, according to a preferred embodiment to each roller is associated a scraper device 6a and 6b capable to detach the laminated rubber tape should it adhere to the roller's surface.

The tape of the rubber mixture laminated between the rollers continuously detached from the roller surface falls onto a first belt conveyor 1c which conveys it to another belt conveyor of a system that, in the example shown, made up also by two other conveyor belts 1a and 1b. The system recirculates the rubber tape R back to the mixing rollers, as schematically shown in Fig. 4.

Along the closed path of recirculation of the rubber tape R on the belt conveyors belts 1c, 1a and 1b, the excess heat generated within the mixture because of the lamination to which is subjected between the rollers 3a and 3b is dissipated by the use of fans or extractors 4, whose action is automatically controlled by a temperature regulation system of the rubber mixture being treated.

In practice, upon a first passage through the mixing rollers 3a and 3b , the batch of rubber mixture R assumes the shape of a tape that which may be either continuous or discontinuous and that circulates through the laminating rollers 3a and 3b, wherefrom it is continuously detached to maintain substantially the shape of a closed loop or tape running away from the rollers. Along its path suitable cooling means ensure a correct control of the temperature of the rubber mixture under treatment.

The homogenization function is also completely automatized in the machine of the invention.

The recirculating rubber tape R upon falling back toward the rollers 3a and 3b crosses vertically the horizontal plane on which the two belt conveyors 2a and 2b lie, through the separation space between the pair of opposed conveyors. The two belt conveyors 2a and 2b may be independently shifted toward and away from each other by means of actuation motor or pneumatic cylinders according to a coordinated sequence of movements. The two belt conveyors 2a and 2b are pushed against the respective opposing edge of the recirculating rubber tape, bending backward the edges of the running tape towards the opposite side and/or toward each other, thus causing eventually a cross over of one edge to the other swellings and bendings that ultimately cause a random lateral shift of rubber tape which is thereafter re-laminated between the rollers 3a and 3b.

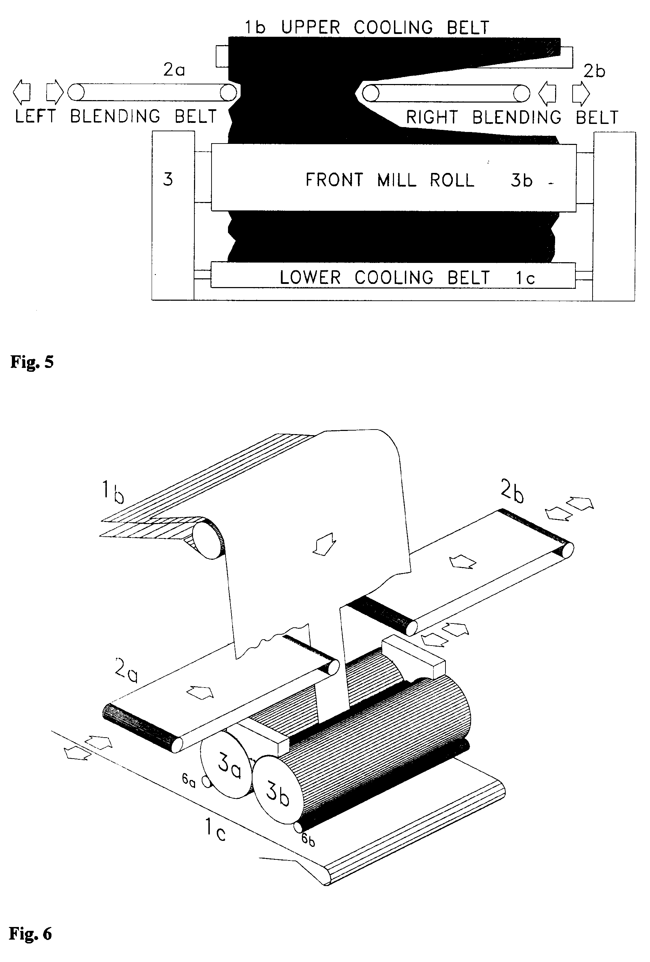

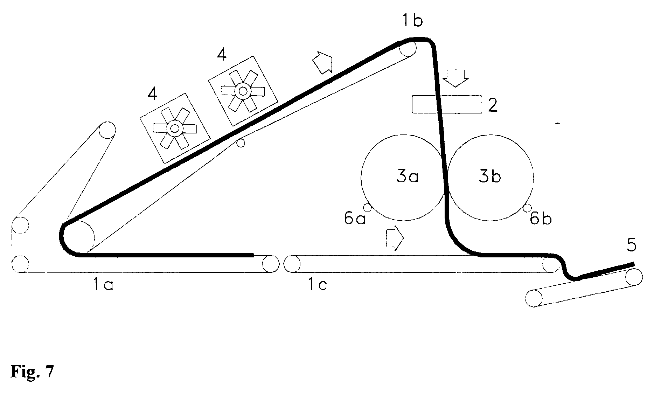

This coordinated homogenization actions performed by the two belt conveyors 2a and 2b is highlighted in Fig. 5 and a schematic perspective view showing the arrangement of the various functional parts is depicted in Fig. 6.

The mixing/homogenizing process may proceed by taking full advantage of the whole laminating width of the machine, by positioning the containment side plates 7a and 7b at the farthest distance from each other, while adequately regulating the lamination gap between the rollers and keeping under control the temperature of the recirculating rubber tape.

The entire mixing/homogenizing process is automated, practically eliminating any manual intervention, thus ensuring a high and constant productivity.

Another important aspect is that the whole machine may be easily enclosed in an insulating box for reducing noise pollution and allow a collection and venting of fumes and gases released by the rubber mass being treated.

Another advantage of the machine is the absence of knives.

Once the process is over, the tape of homogenized mixture may be shaped to assume the width and thickness required by downstream machinery of the production line.

Even this phase is totally automated. The correct positioning of one or both the containment side plates 7a and 7b while regulating the gap between the laminating rollers 3a and 3b is coordinated with the positioning of the two belt conveyors 2a and 2b.

Such a coordinated action of the various adjustment mechanisms eventually produces the shaping of the homogenized rubber in a tape of a desired width and thickness, eventually cooled at a most appropriate discharge temperature.

At this point, the discharge of the homogenized rubber material is done automatically, by interrupting the continuity of the recirculating rubber tape. This may be obtained for example by quickly reducing the gap between the rollers 3a and 3b and stopping momentarily the rollers rotation to cause tearing of the rubber tape pulled by the receiving conveyor 1c. Once continuity of the rubber tape is interrupted, the direction of motion of the conveyor 1c is reversed to convey the rubber tape towards a discharge conveyor system 5, as shown in Fig. 7.

## Claims

1. A method for mixing/homogenizing a batch of rubber mixture in a roller mixer by recirculating the rubber to the inlet of the roller mixer while laterally shifting at least part of the recirculating rubber mixture, characterized in that it comprises
continuously detaching the rubber laminated between the mixing rollers without permitting any banking of the rubber on the rollers surface;
recirculating the whole batch of rubber in the form of a laminated tape along a closed path, remotely from the rollers and on conveyor means homogenizing it by transversely pushing the edges of the running tape toward each other while falling back between the rollers by an opposed pair of belt conveyors independently shiftable toward and away from each other, while cooling the tape of mixture along said closed path of recirculation from and to the rollers;
coordinating the relative positioning of said homogenization belt conveyors, of two containment side plates, the action of means of interrupting the continuity of said tape and of reversal of the direction of the motion of a first belt conveyor downstream of said rollers to discharge a homogenized rubber tape of desired width and thickness, at the end of the mixing/homogenizing treatment.

2. A roller mixer/homogenizer for a batch of rubber mixture comprising a pair of laminating rollers (3a, 3b), means for recirculating and homogenizing the mixture by repeatedly laminating it between said rollers (3a, 3b) while feeding it back to the rollers at different points along the laminating zone defined along said pair of rollers by two spaced apart containment side plates (7a and 7b), characterized in that it comprises
scrapers (6a, 6b) on each roller (3a, 3b) detaching the rubber mixture (R) laminated between the rollers impeding to the mixture to bank on the surface of either one of the rollers;
first belt conveyor means (1c) receiving a laminated and detached rubber tape and cooperating additional belt conveyor means (1a, 1b) cooperating with said first means (1c) to convey the laminated mixture along a closed path back to the inlet nip of said pair of rollers (3a, 3b), in the form of a continuous closed loop tape (R);
at least a pair of coplanar feelers in the form of two spaced apart, counteropposed belt conveyors (2a, 2b) laying on a horizontal plane crossed vertically, between the opposed ends of said belt conveyors, by the recirculating rubber tape (R) falling back between said mixing rollers (3a, 3b), each belt conveyor (2a, 2b) being independently shiftable on said plane against the edge of the running tape (R) to fold it back on itself;
cooling means (4) of the recirculating tape (R) of rubber mixture operatively placed along said closed path of the tape (R) remote from said mixing rollers;
means for interrupting the continuity of said rubber tape (R) actionable in synchronism with reversing means of the motion of said first conveyor means (1c) and in a coordinated manner with a positioning system of said opposed pair of belt conveyors (2a, 2b), of said pair of containment side plates (7a, 7b) for discharging towards a downstream conveyor system (5) a homogenized rubber mixture tape (R) of given width and thickness, at the end of the mixing/homogenizing treatment.

3. The roller mixer/homogenizer according to claim 2, characterized in that said interrupting means of said homogenized rubber tape (R) consist of actuators for quickly reducing the gap between said rollers (3a, 3b) and for interrupting momentarily the rollers rotation for causing the tearing of the tape.

4. The roller mixer/homogenizer according to claim 2, wherein said cooling means (4) are for ventilators.

5. The roller mixer/homogenizer machine according to any of the preceding claims, characterized in that all said operations are automatically and programmably controlled.
